# EUROPÄISCHE PATENTSCHRIFT

(11) **EP 2 910 905 B1**
(45) Veröffentlichungstag und Bekanntmachung des Hinweises auf die Patenterteilung: **05.09.2018**
(21) Anmeldenummer: 15000049.5
(22) Anmeldetag: 12.01.2015
(51) Int. Cl.: G01D 11/30, G01K 1/14

(54) **Messsensorträger, Messsensorträgeranordnung und Messanordnung**
Measurement sensor holder, measurement sensor holder assembly and measuring assembly
Support de capteur de mesure, agencement de support de capteur de mesure et dispositif de mesure

(30) Priorität: 20.02.2014 DE 202014001581 U
(43) Veröffentlichungstag der Anmeldung: 26.08.2015
(73) Patentinhaber: Bachl Dämmtechnik GmbH & Co. KG, 86899 Landsberg a. Lech (DE)
(72) Erfinder: Schiffke, Peter, 86836 Obermeitingen (DE)
(74) Vertreter: Leinweber & Zimmermann

(56) Entgegenhaltungen:
- EP-A1- 1 770 839
- WO-A1-2013/010711
- DE-A1-102007 024 230
- DE-A1-102009 029 769
- DE-U1-202013 005 546

## Beschreibung

Die Erfindung betrifft einen Messsensorträger zum Halten mindestens eines Messsensors an einem Wandelement wie etwa einer Dämmplatte. Der Messsensorträger weist einen in eine erste Hauptfläche des Wandelements integrierbaren und sich im Wesentlichen in einer Hauptebene erstreckenden Halteabschnitt zum Aufnehmen mindestens einen Messsensors auf. Ferner betrifft die Erfindung eine aus zwei miteinander verbindbaren Messsensorträgern bestehende Messsensorträgeranordnung.

Dämmplatten oder andere Wandelemente können Teil eines Wärmedämmverbundsystems sein, das regelmäßig zum Zweck der Fassadendämmung insbesondere im Bereich der Gebäudesanierung eingesetzt wird. Die Dämmplatten bestehen regelmäßig aus einem wärmedämmenden Material wie etwa Polystyrolhartschaum, Mineralwolle wie etwa Stein- und Glaswolle, Mineralschaum, Kalziumsilikathydrate oder Polyurethanschaum und werden mit Hilfe von mechanischen Befestigungsmitteln wie etwa Dübeln oder geeigneten Klebstoffen auf einem bestehenden Untergrund einer zu dämmenden Struktur befestigt. Auf die Dämmplatten wird eine Armierungsschicht aus einem Armierungsgewebe und einem Armierungsmörtel aufgebracht, der gleichzeitig als Unterputz benutzt werden kann. Den Abschluss des Wärmedämmverbundsystems bildet der auf die Armierungsschicht aufgebrachte Außenputz, welcher in Abhängigkeit von den gestalterischen Anforderungen auch noch mit einer geeigneten Fassadenfarbe angestrichen werden kann. Durch Dämmmaßnahmen wie etwa die Anbringung eines Wärmedämmverbundsystems an einer zu dämmenden Struktur wie etwa an der Außenwand eines Gebäudes wird die Energieeffizienz beim Heizen des Gebäudes verbessert bzw. die Transmissionswärmeverluste des Gebäudes werden gesenkt.

In der Druckschrift DE 20 2013 005 546 U1 ist eine Dämmelementanordnung für ein solches Wärmedämmverbundsystem beschrieben, in der Messsensoren zur Messung von Umgebungsparametern wie etwa der Temperatur, der Luftfeuchtigkeit o. dgl. in verschiedenen Schichten der Dämmelementanordnung integriert sind. Aus den gemessenen Werten wird über Algorithmen die tatsächliche Energieeinsparung des energetisch ertüchtigten Bauteils ermittelt. Einzelheiten einer solchen Dämmelementanordnung sind in der genannten Druckschrift DE 20 2013 005 546 U1 erläutert, deren Inhalt durch Verweis in die vorliegende Offenbarung aufgenommen wird.

Die Druckschrift EP 1 770 839 A1 beschreibt eine Sensorhaltevorrichtung, bei der ein Sensor in einem zylindrischen Gehäuse aufgenommen ist, das an einer Trägerstruktur befestigt ist.

Bei der Herstellung einer solchen Dämmelementanordnung werden die Messsensoren an einer oder an beiden Hauptflächen des Wandelements befestigt. Zu diesem Zweck können an den Hauptflächen des Wandelements Messsensorträger mit einem Halteabschnitt zum Halten des Messsensors wie etwa Messsensor-Halterungen befestigt werden, an denen die Messsensoren angebracht werden. Alternativ können die Hauptflächen des Wandelements Vertiefungen zur Aufnahme der Messsensoren aufweisen. Die Anschlusskabel der Messsensoren können bei Bedarf durch eine Bohrung geführt werden, die durch das Wandelement hindurchführt, so dass die Messsignale von Messsensoren, die auf entgegengesetzten Seiten des Wandelement angeordnet sind, einer gemeinsamen Verarbeitungseinheit zugeführt werden können. Es hat sich allerdings herausgestellt, dass in solchen Vertiefungen aufgenommene Messsensoren leicht beschädigt werden und deshalb nur eine eingeschränkte Haltbarkeit aufweisen. Ferner ist das Verlegen der Anschlusskabel von Messsensoren durch das Wandelement hindurch aufwändig.

In Anbetracht der beschriebenen Probleme ist es die Aufgabe der vorliegenden Erfindung, einen Messsensorträger bereitzustellen, der das Anbringen von Messsensoren an Wandelementen vereinfacht. Insbesondere sollen Messsensoren sowie deren Verdrahtungen besonders sicher und geschützt an dem Wandelement befestigbar sein.

Diese Aufgabe wird durch eine Weiterbildung eines eingangs beschriebenen Messsensorträgers gelöst, die im Wesentlichen dadurch gekennzeichnet ist, dass der Messsensorträger einen in eine Durchführung des Wandelements einführbaren und quer, bevorzugt etwa senkrecht zu der Hauptebene verlaufenden rohrförmigen Schaftabschnitt zum Führen eines Anschlusskabels des Messsensors durch das Wandelement aufweist.

Mit anderen Worten besteht der erfindungsgemäße Messsensorträger aus zwei miteinander verbundenen Abschnitten: zum einen dem Halteabschnitt, an dem ein oder mehrere Messsensoren gehalten werden können und der sich im Wesentlichen in einer Hauptebene erstreckt, so dass er in die erste Hauptfläche des Wandelements integrierbar ist, und zum anderen dem sich quer dazu erstreckenden Schaftabschnitt, der sich nach der Anbringung des Messsensorträgers an dem Wandelement durch das Wandelement hindurch in Richtung auf die zweite Hauptfläche des Wandelements erstreckt. Der Schaftabschnitt dient zum Führen einer Verdrahtung des Messsensors auf die andere Seite des Wandelements und ist deshalb nach Art eines Rohrs gebildet, dessen Außendurchmesser an den Innendurchmesser der durch das Wandelement führenden Durchführung angepasst sein kann. Ferner kann der Schaftabschnitt zum Festhalten des Messsensorträgers an dem Wandelement dienen.

Die Erfindung geht auf die Erkenntnis zurück, dass bei an herkömmlichen Messsensorträgern gehaltenen Messsensoren die Anschlusskabel im Übergangsbereich zwischen dem Halteabschnitt und der Wanddurchführung besonders leicht beschädigt werden. Da der erfindungsgemäße Messsensorträger den Halteabschnitt und den damit verbundenen Schaftabschnitt aufweist, so dass die Verkabelung der Messsensoren von dem Halteabschnitt bevorzugt durch eine darin gebildete Öffnung unmittelbar in den Schaftabschnitt geführt werden kann, sind die Anschlusskabel jederzeit geschützt in dem Messsensorträger aufgenommen. Ferner wird mit dem erfindungsgemäßen Messsensorträger die Verlegung der Anschlusskabel durch das Wandelement vereinfacht und beschleunigt, da der Messsensorträger den Schaftabschnitt aufweist, so dass kein zusätzlich durch die Durchführung zu verlegendes Hohlrohr o.dgl. erforderlich ist.

Der Halteabschnitt ist vorzugsweise nach Art einer flachen Schale, einer flachen Dose oder eines Tellers gebildet, in dem der Messsensor sicher und geschützt gehalten werden kann. Der Boden der Schale ist dabei der Hauptfläche des Wandelements bzw. einer darin vorgesehenen Vertiefung zugewandt, und der Messsensor kann zwischen zwei oder mehreren Seitenwänden der Schale in den Halteabschnitt eingesetzt werden. Der Boden der Schale kann eine Öffnung zur Durchführung des Anschlusskabels aufweisen, ausgehend von deren Rand sich der Schaftabschnitt erstrecken kann.

Um eine Messung eines oder mehrerer Umgebungsparameter an der ersten Hauptfläche des Wandelements zu ermöglichen, weist der Messsensorträger mindestens einen in dem Halteabschnitt aufgenommenen, bevorzugt in eine Vertiefung des Halteabschnitts eingesetzten Messsensor zur Messung eines Umgebungsparameters wie etwa der Temperatur, der Luftfeuchtigkeit, des Luftdrucks und/oder eines Wärmestroms auf.

Gemäß der vorliegenden Erfindung weist der Halteabschnitt zwei oder mehr darin aufgenommene Messsensoren zur Messung verschiedener Umgebungsparameter auf. Besonders bevorzugt sind in dem Halteabschnitt vier Messsensoren aufgenommen. Alternativ können in dem Halteabschnitt auch acht oder mehr Messsensoren aufgenommen sein.

Die einzelnen Messsensoren können getrennt voneinander in einer oder mehreren Vertiefungen des Halteabschnitts aufgenommen sein. Alternativ können die Messsensoren jeweils an einer Leiterplatte angeordnet sein, wobei die einzelnen Leiterplatten in entsprechenden Vertiefungen des Halteabschnitts aufgenommen sein können. Alternativ oder zusätzlich sind mehrere oder alle Messsensoren auf einer gemeinsamen Leiterplatine angeordnet, die in dem Halteabschnitt aufgenommen ist. Die Leiterplatine mit den Messsensoren kann erst nach dem Anbringen des Messsensorträgers an dem Wandelement an dem Halteabschnitt befestigt werden bzw. darin eingesetzt werden. Alternativ kann die Leiterplatine mit den Messsensoren vorab in den Halteabschnitt eingearbeitet sein. Eine solche Einarbeitung kann durch Spritzgießen erfolgen.

In einer bevorzugten Ausführungsform der Erfindung ist der Messsensorträger einstückig gebildet. Darunter wird verstanden, dass der Halteabschnitt und der Schaftabschnitt zwar nicht notwendigerweise aus einem einzigen und einheitlichen Teil gefertigt sind, aber so fest miteinander verbunden sind, dass sie nicht mehr voneinander gelöst werden können, ohne dabei beschädigt zu werden. Bspw. ist der Messsensorträger im Spritzgussverfahren geformt. Der Messsensorträger kann teilweise oder vollständig aus einem Kunststoffmaterial wie etwa Polyamid bestehen.

Im Hinblick auf eine möglichst gleichmäßige Anordnung der Messsensoren an der Hauptfläche des Wandelements hat es sich als zweckmäßig herausgestellt, dass der Halteabschnitt einen zentralen Bereich mit einer Öffnung, ausgehend von deren Rand der Schaftabschnitt aus der Hauptebene heraus vorsteht, und einen den zentralen Bereich zumindest abschnittsweise umlaufenden Messsensor-Aufnahmebereich aufweist, in dem die Messsensoren angeordnet werden können. Damit steht der Schaftabschnitt etwa ausgehend von der Mitte des Halteabschnitts aus der Hauptebene des Halteabschnitts heraus vor, wodurch die Befestigung des Messsensorträgers an dem Wandelement stabilisiert werden kann. Ferner können die Verdrahtungen der einzelnen Messsensoren, die in dem umlaufenden Messsensor-Aufnahmebereich angeordnet sind, zunächst dem zentralen Bereich zugeführt werden, von wo aus sie gemeinsam durch die Öffnung in den Schaftabschnitt eintreten können. Dies vereinfacht die Verkabelung insbesondere im Fall von mehreren Messsensoren und beugt Fehlern bei der Verdrahtung vor.

Im Hinblick auf die Stabilität und Festigkeit des Messsensorträgers hat es sich als zweckmäßig erwiesen, dass zwei oder mehr, bevorzugt vier oder mehr, insbesondere acht Stege vorgesehen sind, die den Messsensor-Aufnahmebereich mit dem zentralen Bereich verbinden. Die Stege können zum Führen der Anschlusskabel der Messsensoren von dem Messsensor-Aufnahmebereich zu dem Schaftabschnitt verwendet werden. Vorzugsweise stehen die Stege ausgehend von dem zentralen Bereich in der Hauptebene radial nach außen vor. Im Fall von insgesamt acht Stegen schließen zwei benachbarte Stege einen Winkel von etwa 45° ein.

Eine besonders stabile Anbringung des Halteabschnitts ist dann möglich, wenn der Halteabschnitt im Wesentlichen radförmig ist mit einem im Querschnitt im Wesentlichen U-förmigen Messsensor-Aufnahmebereich, der den zentralen Bereich ringförmig umläuft. Alternativ oder zusätzlich können auch die Stege im Querschnitt im Wesentlichen U-förmig gebildet sein. Auf diese Weise sind die Messsensoren und/oder die Anschlusskabel der Messsensoren, die über die Stege in Richtung auf den zentralen Bereich verlegt werden können, sicher und geschützt in einem jeweils U-förmigen Querschnittprofil aufgenommen. Ferner sind U- oder C-förmige Querschnittprofile besonders biegesteif und stabil.

Der Halteabschnitt kann in der Hauptebene eine maximale Abmessung von mehr als 100 mm und weniger als 500 mm, bevorzugt von mehr als 200 mm und weniger als 300 mm, insbesondere etwa 250 mm haben. Vorzugsweise ist eine Umfangslinie des Halteabschnitts kreisförmig, wobei der Kreisdurchmesser etwa 250 m beträgt.

Typischerweise haben Dämmstoffplatten, an denen der erfindungsgemäße Messsensorträger angebracht werden kann, Abmessungen von 1000 mm x 500 mm. Deshalb sollte der Durchmesser des Halteabschnitts nicht größer als 500 mm sein. Um eine sinnvolle Anordnung der Messsensoren zu ermöglichen, sollte er aber auch nicht kleiner als 100 mm sein. Als ideal hat sich ein Durchmesser von 250 mm erwiesen, um eine gleichmäßige Verteilung der Messsensoren zu ermöglichen.

Zur Berechnung von bestimmten Wärmedämmungskenngrößen einer gedämmten Struktur ist die Messung von Umgebungsparametern auf beiden Seiten des Wandelements erforderlich, so dass Messsensoren auf einander entgegengesetzten Hauptflächen des Wandelements erforderlich sind. In diesem Zusammenhang wird auf die bereits eingangs erwähnte Druckschrift DE 20 2013 005 546 U1 verwiesen, deren Inhalt durch Verweis in die vorliegende Offenbarung aufgenommen wird.

Um eine solche Messung zu ermöglichen, wird gemäß einem weiteren Gesichtspunkt der Erfindung eine Messsensorträgeranordnung bereitgestellt, die einen erfindungsgemäßen ersten Messsensorträger und einen weiteren Messsensorträger aufweist, der einen in eine der ersten Hauptfläche entgegengesetzte zweite Hauptfläche des Wandelements integrierbaren weiteren Halteabschnitt zum Aufnehmen mindestens eines weiteren Messsensors und einen Verbindungsabschnitt zum Verbinden des weiteren Messsensorträgers mit dem ersten Messsensorträger aufweist. Mit anderen Worten können der erste Messsensorträger und der weitere Messsensorträger durch die Durchführung hindurch miteinander verbunden werden und auf diese Weise gleichzeitig jeweils an dem Wandelement befestigt werden. Auf diese Weise kann außerdem sichergestellt werden, dass die an den Halteabschnitten der beiden Messsensorträger anzuordnenden Messsensoren an einander entsprechenden Positionen der beiden Hauptflächen des Wandelements angeordnet sind, was für eine exakte Dämmungskennwertbestimmung wichtig ist.

Zur Vereinfachung der Verkabelung der Messsensoren kann der weitere Messsensorträger einen in die Durchführung des Wandelements ausgehend von der zweiten Hauptfläche einführbaren und quer, bevorzugt etwa senkrecht zu dem weiteren Halteabschnitt verlaufenden rohrförmigen weiteren Schaftabschnitt aufweisen, an dessen vorderem Ende der Verbindungsabschnitt angeordnet ist. Mit anderen Worten haben der erste Messsensorträger und der weitere Messsensorträger einen vergleichbaren Aufbau aus jeweils einem sich in einer Hauptebene erstreckenden Halteabschnitt, an dem jeweils mindestens ein Messsensor gehalten wird, und dem sich jeweils quer dazu erstreckenden Schaftabschnitt, wobei die Schaftabschnitte ausgehend von den beiden entgegengesetzten Hauptflächen des Wandelements in die Durchführung einführbar sind, bis sie im Inneren des Wandelement miteinander verbunden werden.

Im Hinblick auf eine haltbare und störungsfreie Verkabelung der Messsensoren hat es sich als zweckmäßig erwiesen, dass ein vorderes Ende des Schaftabschnitts zur Bildung eines durch das Wandelement führenden rohrförmigen Kanals zumindest teilweise in ein vorderes Ende des weiteren Schaftabschnitts einsteckbar ist oder umgekehrt.

Durch das Einstecken der Schaftabschnitte ineinander können eine form- und/oder kraftschlüssige Verbindung des ersten Messsensorträgers mit dem weiteren Messsensorträger und gleichzeitig eine Befestigung der Messsensorträger an den beiden Hauptflächen erfolgen. Diese Verbindung kann lösbar sein. Da die Messsensoren jedoch üblicherweise dauerhaft in die Hauptflächen des Wandelements integriert werden, ist die Verbindung vorzugsweise unlösbar eingerichtet.

Die Länge der beiden Schaftabschnitte kann je nach Dicke des Wandelements unterschiedlich eingerichtet sein. Typische Längen betragen mehr als 50 mm und weniger als 300 mm. In jedem Fall ist die addierte Länge der beiden Schaftabschnitte größer als die Dicke des Wandelements. Es hat sich als sinnvoll herausgestellt, die Länge der Schaftabschnitte so zu wählen, dass mit einer einzigen Messsensorträgeranordnung mehrere Wandelement-Dicken abgedeckt werden können.

Die Einstecklänge, in der der erste Schaftabschnitt in den weiteren Schaftabschnitt einsteckbar ist, kann variabel eingerichtet sein. Zur Befestigung an einem dünnen Wandelement werden die Schaftabschnitte weiter ineinandergesteckt als bei einem dicken Wandelement.

Vorzugsweise weist der Schaftabschnitt an seinem vorderen Ende Verzahnungen zum Eingriff in Gegenverzahnungen an dem vorderen Ende des weiteren Schaftabschnitts auf. Vorzugsweise sind die Verzahnungen als Innenverzahnungen und die Gegenverzahnungen als Außenverzahnungen eingerichtet oder umgekehrt. Die Verzahnungen und Gegenverzahnungen können derart gegenläufig gestaltet sein, dass ein Einstecken des einen Schaftabschnitts in den anderen Schaftabschnitt zu einem form- und/oder kraftschlüssigen Verzahnungseingriff und damit zu einer bevorzugt unlösbaren Verbindung zwischen dem Messsensorträger und dem weiteren Messsensorträger führt. Zusätzliche Befestigungsmittel zum Anbringen der beiden Messsensorträger an dem Wandelement wie etwa Schrauben, Klebstoff o.dgl. sind dann ggf. nicht mehr erforderlich.

Die Länge des die Verzahnungen bzw. Gegenverzahnungen tragenden Abschnitts am vorderen Ende des Schaftabschnitts kann so eingerichtet sein, dass mehrere Wandelement-Dicken mit einer Messsensorträgeranordnung abgedeckt werden können. Je nach Wandelement-Dicke werden die Schaftabschnitte unterschiedlich weit ineinandergesteckt, wobei die Verzahnungen unterschiedlich weit ineinander einrasten. Dazu kann jede der Verzahnungen in der Längsrichtung des Schaftabschnitts mehr als 10 Zähne, bevorzugt mehr als 20 Zähne, insbesondere 30 Zähne oder mehr aufweisen. Die Zähne können derart an der Wand des Schaftabschnitts angeordnet sein, dass sie den durch den Schaftabschnitt gebildeten Kanal ringförmig umlaufen.

In einer bevorzugten Ausführungsform weist sowohl der Halteabschnitt als auch der weitere Halteabschnitt zumindest jeweils einen Temperaturmesssensor und einen Luftfeuchtigkeitsmesssensor und ggf. einen Sensor zur Messung eines Wärmestroms auf. Vorzugsweise weisen beide Haltabschnitte jeweils vier oder acht Messsensoren an einander entsprechenden Positionen der jeweiligen Hauptfläche auf. Die Anschlusskabel des außen an dem Wandelement angebrachten Messsensoren können durch die miteinander verbundenen Schaftabschnitte sicher und geschützt zu den innen an dem Wandelement angebrachten Messsensoren geführt werden, von wo aus ggf. alle Anschlusskabel gemeinsam einer Verarbeitungseinheit zugeführt werden können.

Abgesehen von dem Verbindungsabschnitt am vorderen Ende des Schaftabschnitts kann der weitere Messsensorträger gleich geformt und aufgebaut sein wie der erste Messsensorträger. Insbesondere können der Halteabschnitt des ersten Messsensorträgers und der weitere Halteabschnitt des weiteren Messsensorträgers einander im Wesentlichen entsprechen. Es wird auf die oben erläuterten Merkmale des Halteabschnitts verwiesen.

Gemäß einem weiteren Gesichtspunkt betrifft die Erfindung eine Messanordnung mit einem Wandelement mit einer ersten Hauptfläche, einer der ersten Hauptfläche entgegengesetzten zweiten Hauptfläche, einer quer zu den Hauptflächen durch das Wandelement führenden Durchführung und einem an dem Wandelement angebrachten erfindungsgemäßen Messsensorträger oder einer erfindungsgemäßen Messsensorträgeranordnung. Das Wandelement kann eine Dämmplatte eines Wärmedämmverbundsystems sein. Das Wandelement kann aus mineralischen, duroplastischen und/oder thermoplastischen Werkstoffen wie etwa Polystyrol bestehen.

Mithilfe der Messsensorträgeranordnung ist eine gleichmäßige und geschützte Anordnung der Messsensoren an dem Wandelement möglich. Ferner lässt sich ein Wandelement mit daran angebrachter Messsensorträgeranordnung einfach vorfertigen. Ein Einbau bzw. eine Integration der Messsensoren in das Wandelement vor Ort ist dann nicht mehr erforderlich. Alternativ ist aber auch eine bauseitige Anordnung denkbar. Sie sorgt für eine sichere Befestigung und Verdrahtung der Messsensoren auch bei der späteren bauseitigen Verklebung des so ausgestatteten Dämmelements.

Vorzugsweise weist die erfindungsgemäße Messanordnung einen ausgehend von der ersten Hauptfläche in die Durchführung eingeführten ersten Messsensorträger und einen ausgehend von der zweiten Hauptfläche in die Durchführung eingeführten weiteren Messsensorträger auf, wobei die Schaftabschnitte der beiden Messsensorträger zur Bildung eines rohrförmigen Kanals form- und/oder kraftschlüssig miteinander verbunden sind. Eine solche Befestigung der Messsensorträger ist besonders einfach und wenig zeitaufwändig. Ferner führt sie dazu, dass die Messsensoren an einander entsprechenden Positionen an den beiden entgegengesetzten Hauptflächen des Wandelements angeordnet sind.

Der Halteabschnitt kann vertieft in eine Hauptfläche des Wandelements eingelassen sein, so dass der in die Hauptfläche integrierte Messsensorträger im Wesentlichen oberflächenbündig mit dem Wandelement abschließt.

Auf der ersten und/oder der zweiten Hauptfläche des Wandelements kann eine Deckschicht wie etwa eine Putzmassenschicht aufgebracht sein, die die Messsensorträgeranordnung bedeckt.

Gemäß einem weiteren Gesichtspunkt betrifft die Erfindung ein Verfahren zum Anbringen einer erfindungsgemäßen Messsensorträgeranordnung an einem Wandelement, bei dem ein Schaftabschnitt eines ersten Messsensorträgers ausgehend von der ersten Hauptfläche des Wandelements in eine Durchführung des Wandelements eingeführt wird, und ein weiterer Schaftabschnitt eines weiteren Messsensorträgers ausgehend von der zweiten Hauptfläche des Wandelement in die Durchführung eingeführt wird, wobei die Schaftabschnitte im Inneren der Durchführung form- und/oder kraftschlüssig miteinander verbunden werden und dazu bevorzugt ineinander eingesteckt werden, wo sie weiter bevorzugt miteinander verrasten.

Um eine oberflächenbündige Anordnung der beiden Messsensorträger in den jeweiligen Hauptflächen zu erreichen, können diese in das Wandelement eingelassen werden. Bei mineralischen oder duroplastischen Werkstoffen kann dies z. B. mittels eines Abtragungswerkzeugs wie etwa einer Oberfräse geschehen. Bei bevorzugten thermoplastischen Stoffen wie z. B. Polystyrol kann dies einfach mit einem erhitzten Werkzeug, das die Form des Halteabschnitts des Messsensorträgers aufweist, als Prägung durchgeführt werden.

In der folgenden Beschreibung wird die Erfindung unter Bezugnahme auf die beigefügten Zeichnungen erläutert. Dabei zeigen:
- Fig. 1: eine aus zwei erfindungsgemäßen Messsensorträgern bestehende erfindungsgemäße Messsensorträgeranordnung vor der Anbringung an einem Wandelement in einer horizontal verlaufenden Schnittebene,
- Fig. 2: die Messsensorträgeranordnung aus Fig. 1 vor der Anbringung an einem Wandelement in einer perspektivischen Ansicht,
- Fig. 3: eine Seitenansicht eines Wandelements mit einem daran angebrachten erfindungsgemäßen Messsensorträger,
- Fig. 4: eine vergrößerte Ansicht eines in dem Halteabschnitt eines Messsensorträgers angeordneten Messsensors,
- Fig. 5: eine vergrößerte perspektivische Ansicht eines Messsensorträgers, und
- Fig. 6: eine vergrößerte Ansicht der vorderen Enden von zwei ineinander gesteckten Schaftabschnitten einer erfindungsgemäßen Messsensorträgeranordnung.

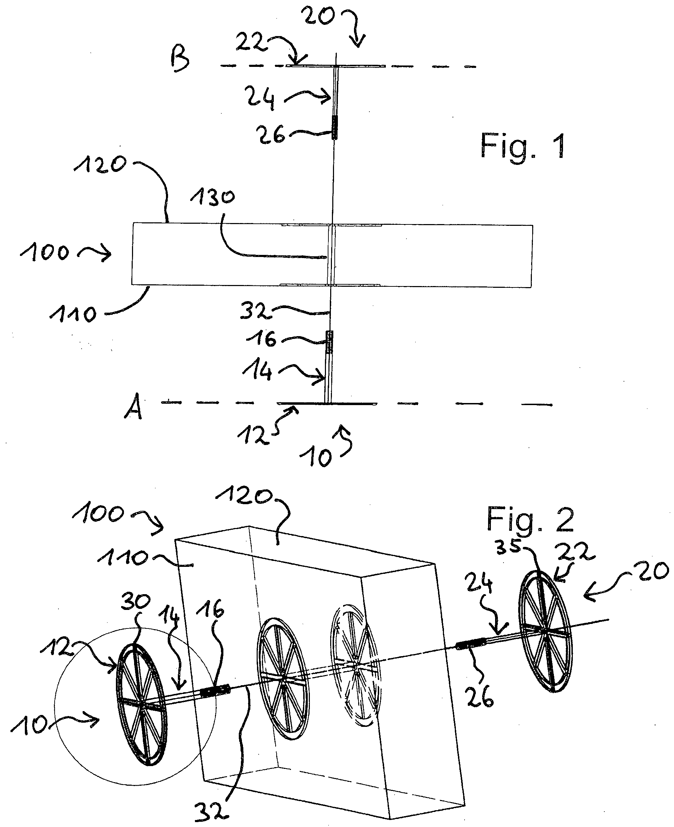

In den Figuren 1 und 2 ist eine aus zwei Messsensorträgern 10, 20 bestehende erfindungsgemäße Messsensorträgeranordnung vor deren Anbringen an einem Wandelement 100 dargestellt. Das Wandelement 100 kann bspw. eine Dämmplatte oder eine gedämmte Wand sein. Vorzugsweise ist das Wandelement eine herkömmliche Dämmplatte für ein Wärmedämmverbundsystem, die regelmäßig eine Abmessung von 1000 mm x 500 mm aufweist. Das Wandelement 100 weist eine erste Hauptfläche 110, eine zweite Hauptfläche 120 und eine senkrecht zu den Hauptflächen 110, 120 durch das Wandelement führende Durchführung 130 in Form einer Bohrung auf. Die Durchführung 130 dient zum Führen von Kabeln 32 wie etwa Spannungsversorgungskabeln, Signalkabeln etc. eines auf der ersten Seite des Wandelements angebrachten Messsensors 30 auf die andere Seite.

Jeder der beiden Messsensorträger 10, 20 besteht aus zwei Abschnitten, nämlich einem sich jeweils in einer Hauptebene A, B erstreckenden Halteabschnitt 12, 22, der beim Anbringen an dem Wandelement parallel zu den Hauptflächen 110, 120 verläuft und in jeweils eine Hauptfläche integrierbar ist, und einem sich etwa senkrecht dazu erstreckenden rohrförmigen Schaftabschnitt 14, 24. Der Halteabschnitt 12, 22 dient jeweils zur Aufnahme von einem oder mehreren Messsensoren 30, 35, und der Schaftabschnitt dient zum einen zum Durchführen der Kabel 32 der Messsensoren 30 durch die Durchführung 130 und zum anderen zum Verbinden der beiden Messsensorträger 10, 20 miteinander und zu deren Befestigung an dem Wandelement 100. Der Halteabschnitt 12, 22 ist jeweils mit dem Schaftabschnitt 14, 24 verbunden oder einteilig bzw. einstückig damit gebildet. Die Messsensorträger bestehen aus einem Kunststoffmaterial wie etwa Polyamid.

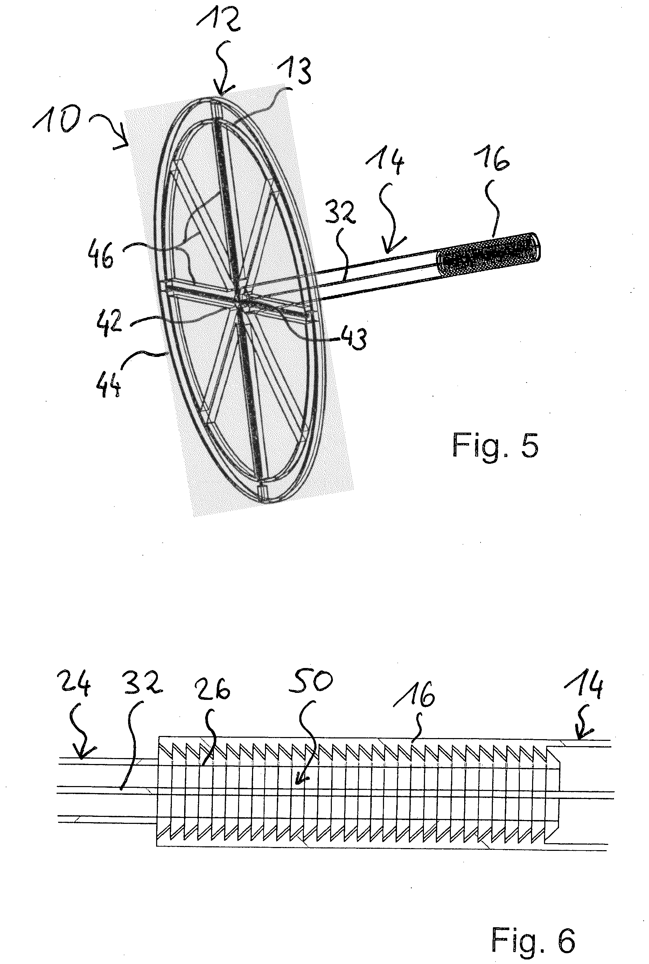

Wie in Fig. 5 dargestellt ist, hat der Messsensorträger 10 insgesamt etwa die Form eines Dübels mit dem den Dübelschaft bildenden Schaftabschnitt 14 und dem den Dübelteller bildenden Halteabschnitt 12, der einen umlaufenden Dübelkranz aufweist.

Der Aufbau des Halteabschnitts 12 ist besonders deutlich in Fig. 5 dargestellt, in der der erste Messsensorträger 10 vergrößert dargestellt ist. Der Halteabschnitt 22 des zweiten Messsensorträgers 20 ist aber im Wesentlichen identisch geformt. Der Halteabschnitt 12 erstreckt sich im Wesentlichen in der Hauptebene A und weist einen zentralen Bereich 42 mit einer Öffnung 43 auf. Ausgehend von dem Öffnungsrand steht der rohrförmige Schaftabschnitt 16 aus der Hauptebene A heraus senkrecht vor. Die Kabel 32 der Messsensoren 30 können ausgehend von der die Messsensoren 30 tragenden vorderen Seite des Halteabschnitts 12 durch die Öffnung 43 hindurch auf die andere Seite des Halteabschnitts 12 in den Schaftabschnitt 14 hinein geführt werden. Um den zentralen Bereich 42 herum verläuft ein den zentralen Bereich 44 etwa ringförmig umlaufender Messsensor-Aufnahmebereich 44 des Halteabschnitts 12, der über insgesamt acht Stege 46 mit dem zentralen Bereich 42 verbunden ist. Alternativ können weniger oder mehr als acht Stege vorgesehen sein, bspw. vier Stege. Insgesamt hat der Halteabschnitt 12 damit im Wesentlichen die Form eines Rads. Der Gesamtdurchmesser des Halteabschnitts 12 in der Hauptebene A kann etwa 250 mm betragen.

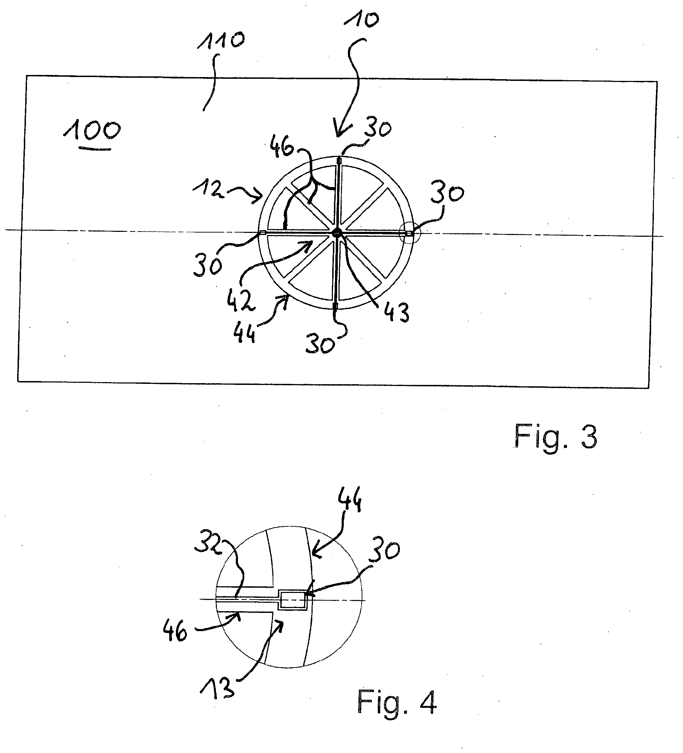

Der ringförmige Messsensor-Aufnahmebereich 44 hat ein etwa U-förmiges oder C-förmiges Profil, so dass die Messsensoren 30 sicher und geschützt zwischen den Seitenwänden des Profils aufgenommen sein können. In dem in Fig. 3 gezeigten Messsensor-Aufnahmebereich 44 sind insgesamt vier Messsensoren 30 aufgenommen, und zwar jeweils an einer Position, von der aus einer der Stege 46 in Richtung auf den zentralen Bereich 42 führt. Alternativ können weniger oder mehr als vier Messsensoren in dem Messsensor-Aufnahmebereich aufgenommen sein. Vorzugsweise ist zumindest einer der Messsensoren ein Temperaturmesser und ein anderer der Messsensoren ein Luftfeuchtigkeitsmesser. Die Anordnung eines Messsensors 30 in dem Messsensor-Aufnahmebereich 44 ist besonders deutlich in Fig. 4 in einer Draufsicht dargestellt. Es ist auch erkennbar, dass ein Anschlusskabel 32 des Messsensors 30 über den Steg 46 in Richtung auf den zentralen Bereich 42 geführt wird. Dazu kann der Steg 46 ebenso wie der Messsensor-Aufnahmebereich 12 im Schnitt U-förmig gebildet sein, so dass das Kabel 32 sicher über den Steg 46 geführt werden kann.

Wie besonders deutlich in Fig. 3 dargestellt ist, laufen die vier Kabelstränge der vier Messsensoren 30 sternförmig auf den zentralen Bereich 42 zu, von wo aus sie in den Schaftabschnitt 14 eintreten. Ein derart geformter Halteabschnitt 12 ist besonders stabil und formbeständig. Ferner kann damit eine gleichmäßig um die Schaftlängsachse verteilte Anordnung der Messsensoren 30 sichergestellt werden.

Der Halteabschnitt 22 des zweiten Messsensorträgers 20 weist ebenfalls vier sternförmig um die Längsachse des Schaftabschnitts 24 verteilte Messsensoren 35 auf (siehe Fig. 2). Die Messsensoren 35 können exakt in derselben Lage in die zweite Hauptfläche 120 integriert werden wie die Messsensoren 30 in die erste Hauptfläche 110.

Der Halteabschnitt 12, 22 kann auch eine andere Gestalt haben. Es ist vorteilhaft, wenn er eine Vertiefung 13 zur Aufnahme des Messsensors 30 aufweist. Er kann bspw. schalen- oder dosenförmig sein. Der Halteabschnitt ist nicht notwendigerweise flach, sondern kann auch je nach Größe des aufzunehmenden Sensors tief ausgebildet sein.

Die Messsensoren 30 können angeklebt oder auf andere Weise in dem Messsensor-Aufnahmebereich 44 angebracht werden. Bspw. können sie an einer Leiterplatte angebracht sein, die in dem Messsensor-Aufnahmebereich 44 aufgenommen ist. Alternativ wird die Leiterplatte bereits bei der Herstellung des Messsensorträgers in den Messsensor-Aufnahmebereich 44 eingegossen.

Wie in Fig. 6 in einer stark vergrößerten Schnittansicht dargestellt ist, weisen die rohrförmigen Schaftabschnitte 14, 24 der beiden Messsensorträger 10, 20 an ihren vorderen Enden 16, 26 jeweils Verbindungsabschnitte zum Verbinden der beiden Messsensorträger 10, 20 im Inneren der Durchführung 130 auf. Dazu trägt das vordere Ende 16 des ersten Schaftabschnitts 14 eine Innenverzahnung und das vordere Ende 26 des zweiten Schaftabschnitts 24 eine Außenverzahnung. Wenn das vordere Ende 26 des zweiten Schaftabschnitts 24 in das vordere Ende 16 des ersten Schaftabschnitts 14 eingesteckt wird, greifen die Verzahnungen ineinander ein, so dass die Messsensorträger 10, 20 unlösbar aneinander befestigt werden. Je kürzer die Durchführung 130 ist, desto weiter werden die vorderen Enden ineinandergeschoben, wobei dann mehr Zähne der Verzahnungen ineinander einrasten. Die erfindungsgemäße Messsensorträgeranordnung ist deshalb für verschiedene Dämmelementstärken einsetzbar. Diese form- und kraftschlüssige Befestigung der Messsensorträger an dem Wandelement ist besonders schnell herstellbar. Andere Verbindungsmechanismen wie etwa Rastmechanismen, Schraubmechanismen, Bajonettmechanismen o.dgl. zur Verbindung der beiden Schaftabschnitte sind alternativ ebenso vorstellbar, bieten aber weniger Flexibilität im Hinblick auf unterschiedliche Dämmelementstärken.

Gleichzeitig wird durch die Verbindung der beiden Messsensorträger 10, 20 ein durch die Durchführung 130 führender Kanal 50 gebildet, durch den die Kabel 32 der Messsensoren 30 oder 35 geschützt verlegt werden können, ohne dass weitere Maßnahmen wie etwa das Verlegen eines Hohlrohrs erforderlich sind.

Vor der Einführung der beiden Messsensorträger 10, 20 in das Wandelement 100 ausgehend von den beiden Hauptflächen 110, 120 werden die Durchführung 130 und zwei an die Abmessung und Tiefe der Halteabschnitte 12, 22 angepasste Vertiefungen in die beiden Hauptflächen 110, 120 eingebracht. Wenn das Wandelement 100 aus Polystyrol besteht, können die Vertiefungen mit einem erhitzten Stempel eingeprägt werden. Die Messsensorträger können dann oberflächenbündig in die Hauptflächen integriert werden (siehe Fig. 1).

Nach dem Einstecken der beiden Messsensorträger können die Halteabschnitte der Messsensorträger mit einer geeigneten Schutzmasse abgestrichen werden. Dies dient dem Schutz der Messsensoren bei dem anschließenden Verputzen der Platte bzw. beim Einbau des Wandelements in ein Wärmedämmverbundsystem oder beim Anbau der Platte an eine zu dämmende Struktur.

### Bezugszeichenliste

- 10: erster Messsensorträger
- 12: Halteabschnitt
- 13: Vertiefung
- 14: Schaftabschnitt
- 16: vorderes Ende des Schaftabschnitts
- 20: weiterer Messsensorträger
- 22: weiterer Halteabschnitt
- 24: weiterer Schaftabschnitt
- 26: vorderes Ende des weiteren Schaftabschnitts
- 30: Messsensor(en)
- 32: Kabel der Messsensoren
- 35: weitere(r) Messsensor(en)
- 42: zentraler Bereich des Halteabschnitts
- 43: Öffnung im zentralen Bereich
- 44: Messsensor-Aufnahmebereich des Halteabschnitts
- 46: Steg(e)
- 50: rohrförmiger Kanal
- 100: Wandelement
- 110: erste Hauptfläche
- 120: zweite Hauptfläche
- 130: Durchführung
- A: erste Hauptebene
- B: zweite Hauptebene

## Patentansprüche

1. Messsensorträger (10) zum Halten mindestens eines Messsensors (30) an einem Wandelement (100) wie etwa einer Dämmplatte
mit einem in eine erste Hauptfläche (110) des Wandelements (100) integrierbaren und sich im Wesentlichen in einer Hauptebene (A) erstreckenden Halteabschnitt (12) zum Aufnehmen mindestens eines Messsensors (30),
**dadurch gekennzeichnet, dass** der Messsensorträger (10) einen in eine Durchführung (130) des Wandelements einführbaren und quer, bevorzugt etwa senkrecht zu der Hauptebene (A) verlaufenden rohrförmigen Schaftabschnitt (14) zum Führen eines Anschlusskabels (32) des Messsensors (30) durch das Wandelement (100) aufweist,
wobei der Messsensorträger zwei oder mehr in dem Halteabschnitt (12) aufgenommene Messsensoren (30) zur Messung verschiedener Umgebungsparameter wie etwa der Temperatur, der Luftfeuchtigkeit und/oder eines Wärmestroms aufweist.

2. Messsensorträger nach Anspruch 1, **dadurch gekennzeichnet, dass** mindestens ein Messsensor in eine Vertiefung des Halteabschnitts eingesetzt ist.

3. Messsensorträger nach Anspruch 1 oder 2, **gekennzeichnet durch** vier oder mehr in dem Halteabschnitt (12) aufgenommene Messsensoren (30) zur Messung verschiedener Umgebungsparameter.

4. Messsensorträger nach einem der vorhergehenden Ansprüche, **dadurch gekennzeichnet, dass** die in dem Halteabschnitt (12) aufgenommenen Messsensoren (30) an einer bevorzugt gemeinsamen Leiterplatine befestigt sind, die in einer Vertiefung (13) des Halteabschnitts (12) angeordnet ist.

5. Messsensorträger nach einem der vorhergehenden Ansprüche, **dadurch gekennzeichnet, dass** eine die Messsensoren tragende Leiterplatine bevorzugt durch ein Spritzgussverfahren in den Halteabschnitt (12) eingearbeitet ist.

6. Messsensorträger nach einem der vorhergehenden Ansprüche, **dadurch gekennzeichnet, dass** der Messsensorträger (10) einstückig und/oder aus einem Kunststoffmaterial wie etwa Polyamid gebildet ist.

7. Messsensorträger nach einem der vorhergehenden Ansprüche, **dadurch gekennzeichnet, dass** der Halteabschnitt (12) einen zentralen Bereich (42) mit einer Öffnung (43), von der ausgehend der Schaftabschnitt (14) vorsteht, und einen den zentralen Bereich (42) zumindest abschnittsweise umlaufenden Messsensor-Aufnahmebereich (44) aufweist, in dem die Messsensoren (30) aufnehmbar sind.

8. Messsensorträger nach Anspruch 7, **gekennzeichnet durch** zwei oder mehr, bevorzugt vier oder mehr, insbesondere acht den Messsensor-Aufnahmebereich (44) mit dem zentralen Bereich (42) verbindende Stege (46) zum Führen von Anschlusskabeln (32) der Messsensoren (30) von dem Messsensor-Aufnahmebereich (44) in den Schaftabschnitt (14).

9. Messsensorträger nach Anspruch 7 oder 8, **dadurch gekennzeichnet, dass** der Halteabschnitt (12) im Wesentlichen radförmig ist mit einem im Querschnitt im Wesentlichen U-förmigen Messsensor-Aufnahmebereich (44), der den zentralen Bereich (42) ringförmig umläuft und mit diesem über bevorzugt im Wesentlichen U-förmige Stege (46) verbunden ist.

10. Messsensorträger nach einem der vorhergehenden Ansprüche, **dadurch gekennzeichnet, dass** der Halteabschnitt (12) in der Hauptebene (A) eine maximale Abmessung von mehr als 100 mm und weniger als 500 mm, bevorzugt von mehr als 200 mm und weniger als 300 mm, insbesondere etwa 250 mm hat.

11. Messsensorträgeranordnung mit einem Messsensorträger (10) nach einem der vorhergehenden Ansprüche, **gekennzeichnet durch** einen weiteren Messsensorträger (20) mit einem in eine der ersten Hauptfläche (110) entgegengesetzte zweite Hauptfläche (120) des Wandelements integrierbaren weiteren Halteabschnitt (22) zum Aufnehmen mindestens eines weiteren Messsensors (35) und mit einem Verbindungsabschnitt zum Verbinden des weiteren Messsensorträgers (20) mit dem Messsensorträger (10).

12. Messsensorträgeranordnung nach Anspruch 11, **dadurch gekennzeichnet, dass** der weitere Messsensorträger (20) einen in die Durchführung (130) des Wandelements von der anderen Seite einführbaren und quer, bevorzugt etwa senkrecht zu dem weiteren Halteabschnitt (22) verlaufenden rohrförmigen weiteren Schaftabschnitt (24) aufweist, an dessen vorderem Ende (26) der Verbindungsabschnitt angeordnet ist.

13. Messsensorträgeranordnung nach Anspruch 12, **dadurch gekennzeichnet, dass** ein vorderes Ende (26) des weiteren Schaftabschnitts (24) zur Bildung eines durch das Wandelement hindurchführenden rohrförmigen Kanals (50) zumindest teilweise in ein vorderes Ende (16) des Schaftabschnitts (14) einsteckbar ist oder umgekehrt.

14. Messsensorträgeranordnung nach Anspruch 12 oder 13, **dadurch gekennzeichnet, dass** der Schaftabschnitt (14) Innenverzahnungen zum Eingriff in komplementäre Außenverzahnungen des weiteren Schaftabschnitts (24) aufweist oder umgekehrt.

15. Messanordnung mit einem Wandelement (100) wie etwa einer Dämmplatte mit einer ersten Hauptfläche (110), einer der ersten Hauptfläche entgegengesetzten zweiten Hauptfläche (120), einer quer zu den Hauptflächen (110, 120) durch das Wandelement führenden Durchführung (130) und einem an dem Wandelement (100) angebrachten Messsensorträger nach einem der Ansprüche 1 bis 10 oder einer Messsensorträgeranordnung nach einem der Ansprühe 11 bis 14.

16. Messanordnung nach Anspruch 15 mit einem ausgehend von der ersten Hauptfläche (110) in die Durchführung (130) eingeführten ersten Messsensorträger (10) und einem ausgehend von der zweiten Hauptfläche (120) in die Durchführung (130) eingeführten weiteren Messsensorträger (20), wobei die Schaftabschnitte (14, 24) der beiden Messsensorträger (10, 20) bevorzugt zur Bildung eines rohrförmigen Kanals (50) form- und/oder kraftschlüssig miteinander verbunden sind.

17. Messanordnung nach Anspruch 15 oder 16, **dadurch gekennzeichnet, dass** der Halteabschnitt (12, 22) vertieft in eine Hauptfläche (110, 120) des Wandelements (100) eingelassen ist, so dass der Halteabschnitt (12, 22) im Wesentlichen oberflächenbündig mit dem Wandelement (100) abschließt.

18. Messanordnung nach einem der Ansprüche 15 bis 17, **gekennzeichnet durch** eine die Messsensorträgeranordnung bedeckende, die Messsensoren schützende Deckmasse wie etwa eine Putzmassenschicht.

## Claims

1. A measurement sensor holder (10) for holding at least one measuring sensor (30) on a wall element (100) such as an insulating panel
with a holding portion (12) which can be integrated into a first main surface (110) of the wall element (100) and extends substantially in a main plane (A) to house at least one measuring sensor (30),
**characterised in that** the measurement sensor holder (10) has a tubular shaft section (14) which can be inserted into a duct (130) of the wall element and extending transversely, preferably approximately perpendicular to the main plane (A), for guiding a connecting cable (32) of the measuring sensor (30) through the wall element (100),
the sensor holder comprising two or more measuring sensors (30) housed in the holding portion (12) for measuring various environmental parameters such as temperature, humidity and/or heat flow.

2. The measurement sensor holder according to claim 1, **characterised in that** at least one measuring sensor is placed into a recess in the holding portion.

3. The measurement sensor holder according to claim 1 or 2, **characterised by** four or more measuring sensors (30) housed in the holding portion (12) for measuring various environmental parameters.

4. The measurement sensor holder according to one of the preceding claims, **characterised in that** the measuring sensors (30) housed in the holding portion (12) are fastened to a preferably common printed circuit board which is arranged in a recess (13) in the holding portion (12).

5. The measurement sensor holder according to one of the preceding claims, **characterised in that** a printed circuit board carrying the measuring sensors is incorporated into the holding portion (12) preferably by an injection moulding process.

6. The measurement sensor holder according to one of the preceding claims, **characterised in that** the measurement sensor holder (10) is formed in one piece and/or from a plastic material such as polyamide.

7. The measurement sensor holder according to one of the preceding claims, **characterised in that** the holding portion (12) has a central region (42) with an opening (43) from which the shaft section (14) projects, and a measuring sensor housing area (44) that surrounds at least in part the central region (42) and in which the measuring sensors (30) can be housed.

8. The measurement sensor holder according to claim 7, **characterised by** two or more, preferably four or more, in particular eight webs (46) connecting the measuring sensor housing area (44) with the central area (42) to guide the connection cables (32) of the measuring sensors (30) from the measuring sensor housing area (44) into the shaft section (14).

9. The measurement sensor holder according to claim 7 or 8, wherein the holding portion (12) is substantially wheel-shaped with a measuring sensor housing area (44) which is substantially U-shaped in cross-section and which surrounds the central region (42) in an annular manner and is connected thereto via substantially U-shaped webs (46).

10. The measurement sensor holder according to one of the preceding claims, wherein the holding portion (12) in the main plane (A) has a maximum dimension of more than 100mm and less than 500mm, preferably more than 200mm and less than 300mm, in particular about 250mm.

11. A measurement sensor holder assembly comprising a measurement sensor holder (10) according to one of the preceding claims, **characterised by** an additional measurement sensor holder (20) comprising a further holding portion (22) for housing at least one further measuring sensor (35) and which can be integrated into a second main surface (120) of the wall element opposite the first main surface (110), and comprising a connecting portion for connecting the additional measurement sensor holder (20) to the measurement sensor holder (10).

12. The measurement sensor holder assembly according to claim 11, **characterised in that** the additional measurement sensor holder (20) has an additional tubular shaft section (24) which can be inserted from the other side into the duct (130) of the wall element and extends transversely, preferably approximately perpendicular to the further holding portion (22), the connecting section being arranged at the front end (26) of said additional tubular shaft section.

13. The measurement sensor holder assembly according to claim 12, **characterised in that** a front end (26) of the additional shaft section (24) can at least be partially inserted into a front end (16) of the shaft section (14) or vice versa to form a tubular channel (50) passing through the wall element.

14. The measurement sensor holder assembly according to claim 12 or 13, **characterised in that** the shaft section (14) has internal toothing for engagement with complementary external toothing of the additional shaft section (24) or vice versa.

15. A measuring arrangement comprising a wall element (100) such as an insulating panel having a first main surface (110), a second main surface (120) opposite the first main surface, a duct (130) extending transversely to the main surfaces (110, 120) through the wall element, and a measuring sensor holder according to one of claims 1 to 10 mounted on the wall element (100) or a measurement sensor holder assembly according to one of claims 11 to 14.

16. The measuring arrangement according to claim 15 having a first measurement sensor holder (10) inserted into the duct (130) from the first main surface (110), and an additional measurement sensor holder (20) inserted into the duct (130) from the second main surface (120), wherein the shaft sections (14, 24) of the two measuring sensor holders (10, 20) are connected together by positive locking and/or frictional connection preferably in order to form a tubular channel (50).

17. The measuring arrangement according to claim 15 or 16, **characterised in that** the holding portion (12, 22) is recessed in a main surface (110, 120) of the wall element (100) so that the holding portion (12, 22) is substantially flush with the wall element (100).

18. The measuring arrangement according to one of claims 15 to 17, **characterised by** a covering material covering the measurement sensor holder assembly and protecting the measuring sensors, such as a plaster or render layer.

## Revendications

1. Support de capteur de mesure (10) destiné à retenir au moins un capteur de mesure (30) sur un élément de paroi (100) tel qu'une plaque isolante, comportant :
une section de retenue (12) susceptible d'être intégrée dans une première surface principale (110) de l'élément de paroi (100) en s'étendant sensiblement dans un plan principal (A) et destinée à recevoir au moins un capteur de mesure (30),
**caractérisé en ce que** le support de capteur de mesure (10) présente une partie d'arbre (14) tubulaire susceptible d'être introduite dans un passage (130) de l'élément de paroi en s'étendant transversalement, de préférence sensiblement perpendiculairement au plan principal (A), et destinée à conduire un câble de raccordement (32) du capteur de mesure (30) à travers l'élément de paroi (100),
ledit support de capteur de mesure présentant au moins deux capteurs de mesure (30) reçus dans la section de retenue (12) afin de mesurer divers paramètres environnementaux tels que la température, l'humidité de l'air et/ou un flux thermique.

2. Support de capteur de mesure selon la revendication 1, **caractérisé en ce qu'**au moins un capteur de mesure est disposé dans une cavité de la section de retenue.

3. Support de capteur de mesure selon la revendication 1 ou 2, **caractérisé par** au moins quatre capteurs de mesure (30) reçus dans la section de retenue (12) afin de mesurer divers paramètres environnementaux.

4. Support de capteur de mesure selon l'une des revendications précédentes, **caractérisé en ce que** les capteurs de mesure (30) reçus dans la section de retenue (12) sont fixés sur une carte de circuit imprimé de préférence commune, située dans une cavité (13) de la section de retenue (12).

5. Support de capteur de mesure selon l'une des revendications précédentes, **caractérisé en ce qu'**une carte de circuit imprimé porteuse des capteurs de mesure est incluse dans la section de retenue (12) de préférence selon un procédé de moulage par injection.

6. Support de capteur de mesure selon l'une des revendications précédentes, **caractérisé en ce que** le support de capteur de mesure (10) est conçu d'un seul tenant et/ou dans une matière plastique telle que le polyamide.

7. Support de capteur de mesure selon l'une des revendications précédentes, **caractérisé en ce que** la section de retenue (12) présente une zone centrale (42) pourvue d'une ouverture (43) à partir de laquelle la partie d'arbre (14) fait saillie, ainsi qu'une zone de réception de capteurs de mesure (44) qui entoure au moins partiellement la zone centrale (42) et dans laquelle les capteurs de mesure (30) peuvent être reçus.

8. Support de capteur de mesure selon la revendication 7, **caractérisé par** au moins deux, de préférence au moins quatre et notamment huit rayons (46) qui relient la zone de réception de capteurs de mesure (44) à la zone centrale (42) et qui permettent de conduire des câbles de raccordement (32) des capteurs de mesure (30) depuis la zone de réception de capteurs de mesure (44) jusque dans la partie d'arbre (14).

9. Support de capteur de mesure selon la revendication 7 ou 8, **caractérisé en ce que** la section de retenue (12) a sensiblement la forme d'une roue et présente une zone de réception de capteurs de mesure (44) de section transversale sensiblement en forme de U et qui entoure la zone centrale (42) à la manière d'un anneau en étant reliée à celle-ci par le biais de rayons (46) de préférence sensiblement en forme de U.

10. Support de capteur de mesure selon l'une des revendications précédentes, **caractérisé en ce que** la section de retenue (12) présente, dans le plan principal (A), une dimension maximale de plus de 100 mm et de moins de 500 mm, de préférence de plus de 200 mm et de moins de 300 mm, en étant notamment d'environ 250 mm.

11. Agencement de supports de capteur de mesure possédant un support de capteur de mesure (10) selon l'une des revendications précédentes, **caractérisé par** un support de capteur de mesure supplémentaire (20) comportant une section de retenue supplémentaire (22) qui est susceptible d'être intégrée dans une deuxième surface principale (120) de l'élément de paroi opposée à la première surface principale (110) et qui est destinée à recevoir au moins un capteur de mesure supplémentaire (35), et comportant une section de raccord permettant de raccorder le support de capteur de mesure supplémentaire (20) au support de capteur de mesure (10).

12. Agencement de supports de capteur de mesure selon la revendication 11, **caractérisé en ce que** le support de capteur de mesure supplémentaire (20) présente une partie d'arbre supplémentaire (24) tubulaire susceptible d'être introduite dans le passage (130) de l'élément de paroi depuis l'autre côté de celui-ci, et s'étendant transversalement, de préférence sensiblement perpendiculairement à la section de retenue supplémentaire (22), la section de raccord étant disposée à l'extrémité avant (26) de ladite partie d'arbre supplémentaire.

13. Agencement de supports de capteur de mesure selon la revendication 12, **caractérisé en ce qu'**une extrémité avant (26) de la partie d'arbre supplémentaire (24) peut être emboîtée au moins partiellement dans une extrémité avant (16) de la partie d'arbre (14), ou inversement, afin de créer un canal tubulaire (50) traversant l'élément de paroi.

14. Agencement de supports de capteur de mesure selon la revendication 12 ou 13, **caractérisé en ce que** la partie d'arbre (14) présente des dents intérieures destinées à s'engrener dans des dents extérieures complémentaires de la partie d'arbre supplémentaire (24) ou inversement.

15. Dispositif de mesure comportant un élément de paroi (100) tel qu'une plaque isolante présentant une première surface principale (110), une deuxième surface principale (120) opposée à la première surface principale, un passage (130) traversant l'élément de paroi entre les surfaces principales (110, 120) et un support de capteur de mesure selon l'une des revendications 1 à 10 agencé sur l'élément de paroi (100) ou un agencement de supports de capteur de mesure selon l'une des revendications 11 à 14.

16. Dispositif de mesure selon la revendication 15 comportant un premier support de capteur de mesure (10) introduit dans le passage (130) à partir de la première surface principale (110), ainsi qu'un support de capteur de mesure supplémentaire (20) introduit dans le passage (130) à partir de la deuxième surface principale (120), les parties d'arbre (14, 24) des deux supports de capteur de mesure (10, 20) étant reliées par complémentarité de forme et/ou par friction afin de créer de préférence un canal tubulaire (50).

17. Dispositif de mesure selon la revendication 15 ou 16, **caractérisé en ce que** la section de retenue (12, 22) est encastrée en profondeur dans une surface principale (110, 120) de l'élément de paroi (100) de manière que la section de retenue (12, 22) se retrouve sensiblement à fleur de l'élément de paroi (100).

18. Dispositif de mesure selon l'une des revendications 15 à 17, **caractérisé par** une matière de revêtement recouvrant l'agencement de supports de capteur de mesure et protégeant les capteurs de mesure, telle qu'un crépi.
